# EUROPÄISCHE PATENTSCHRIFT

(11) **EP 1 304 266 B1**
(45) Veröffentlichungstag und Bekanntmachung des Hinweises auf die Patenterteilung: **08.09.2004**
(21) Anmeldenummer: 02021957.2
(22) Anmeldetag: 30.09.2002
(51) Int. Cl.: B60R 21/13

(54) **Überrollschutzsystem für Kraftfahrzeuge**
Rollbar protection system for motor vehicles
Système d'arceau de sécurité pour véhicules automobiles

(30) Priorität: 18.10.2001 DE 10151387
(43) Veröffentlichungstag der Anmeldung: 23.04.2003
(73) Patentinhaber: ISE Innomotive Systems Europe GmbH, 51702 Bergneustadt (DE)
(72) Erfinder: Berges, Stephan, 51647 Gummersbach (DE); Lang, Joszef, 1131 Budapest (HU); Nowack, Reinhard, 57489 Drolshagen (DE)
(74) Vertreter: Fuchs Mehler Weiss & Fritzsche

(56) Entgegenhaltungen:
- DE-A- 4 342 400
- DE-C- 10 040 649

## Beschreibung

Die Erfindung bezieht sich auf ein Überrollschutzsystem, mit einem Überrollbügel, der in einem fahrzeugfest anbringbaren kassettenartigen Gehäuse geführt ist, das zwei U-förmige Seitenteile besitzt, die unten über ein Bodenteil und oben über einen Führungsblock miteinander verbunden sind.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem fahrzeugfesten Führungskörper geführten U-förmigen oder aus einem Profilkörper gebildeten Überrollkörper, auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall sensorgesteuert unter Lösen der Haltevorrichtung, durch die Federkraft in eine obere, schützende Stellung bringbar, wobei eine dann in Wirkeingriff tretende Verriegelungseinrichtung ein Eindrücken des Überrollbügels verhindert.
Dabei ist jedem Fahrzeugsitz eine Kassette zugeordnet.
Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.
Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs- Element mit dem Überrollbügel und das andere fahrzeugfest verbunden ist.

Eine derartige Kassetten-Konstruktion eines Überrollbügelschutzsystems mit einem U-förmigen Überrollbügel zeigt beispielsweise die DE 43 42 400 A 1.

Das bekannte Überrollschutzsystem nach der DE 43 42 400 A1 weist ein Gehäuse in Form einer einseitig offenen, U-förmigen Kassette auf, mit zwei Seitenwänden, die auf der offenen Seite der Kassette jeweils einen nach außen abgekanteten Winkelabschnitt zur fahrzeugfesten Befestigung der Kassette besitzen, an denen weiterhin ein Bodenblech befestigt ist, und die schließlich frontseitig über eine Deckwand miteinander verbunden sind. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, im Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Eine verbesserte Version eines derartigen Kassettensystems zeigt die DE 100 40 649 C1, das U-förmige Seitenteile besitzt, in denen der Führungsblock über U-förmige Fortsätze befestigt und die Traverse mit entsprechenden Fortsätzen geführt ist.

Gemäß dem Stand der Technik erfolgt die mechanische Verbindung des Führungsblockes mit den U-förmigen Seitenteilen über acht Nietverbindungen. Bei Nietverbindungen entstehen typischerweise Überstände, die das Kassetten-Einbau-Maß über die Breite der U-förmigen Seitenteile hinaus vergrößern. Da das Einbau-Maß, vorgegeben vom Fahrzeughersteller, zu immer kleineren Werten tendiert, war es notwendig, in einem dem Nietvorgang vorhergehenden Schritt die Nietlöcher anzusenken, damit der Nietkopf nicht übersteht. Dieses Verfahren ist jedoch relativ aufwändig.

Der Erfindung liegt die Aufgabe zugrunde, für das eingangs bezeichnete Überrollschutzsystem für Kraftfahrzeuge mit einem Überrollbügel, der in einem fahrzeugfest anbringbaren kassettenartigen Gehäuse geführt ist, das zwei U-förmige Seitenteile besitzt, die unten über ein Bodenteil und oben über einen Führungsblock ohne seitlichen Überstand miteinander verbunden sind, eine mechanische Verbindung des Führungsblockes mit den U-förmigen Seitenteilen zu schaffen, die mit relativ einfachen Mitteln ohne Überstände herstellbar ist.

Die Lösung dieser Aufgabe gelingt gemäß der Erfindung dadurch, daß der Führungsblock und die U-förmigen Seitenteile integrale Verbindungselemente für eine formschlüssige Verbindung in Form einer Rast- oder Schnappverbindung aufweisen.

Eine derartige formschlüssige Verbindung ohne seitlichen Überstand, die also in das Kassetteninnere gerichtet ist, ist relativ einfach herzustellen, insbesondere indem die Verbindungselemente bereits bei der Herstellung der U-förmigen Seitenteile und des Führungsblockes mit ausgeformt werden. Die Fügetechnik ist mit Vorteil werkzeugfrei und benötigt insbesondere keine Nietstation. Auch ist eine sehr montagefreundliche formschlüssige Verbindung gegeben, da der Führungsblock einfach in die U-förmigen Seitenteile eingeschoben werden kann und dann selbsttätig in der Soll-Position einrastet.

Dem Fachmann stehen eine Reihe von Möglichkeiten zur Ausbildung einer derartigen Rast- oder Schnappverbindung zur Verfügung. Eine vorteilhafte Konstruktion ist gemäß einer Weiterbildung der Erfindung gegeben, wenn an beiden Schenkeln der U-förmigen Seitenteile jeweils eine elastisch nachgebende, zum Kassetteninneren hin abgebogene Lasche oder Zunge als ein Verbindungselement ausgebildet ist, und an den Enden des Führungsblockes, die in den U-förmigen Seitenteilen aufgenommen sind, seitlich Nuten als das andere Verbindungselement ausgeformt sind, derart, daß in der Soll-Befestigungsposition die Lasche oder Zunge in die zugeordnete Nut einrastet.

Eine derartige formschlüssige Verbindung ist mit Vorteil auf relativ einfache und wirtschaftliche Weise herzustellen, indem die Lasche oder Zunge jeweils bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, im Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Eine verbesserte Version eines derartigen Kassettensystems zeigt die DE 100 40 649 C1, das U-förmige Seitenteile besitzt, in denen der Führungsblock über U-förmige Fortsätze befestigt und die Traverse mit entsprechenden Fortsätzen geführt ist.

Gemäß dem Stand der Technik erfolgt die mechanische Verbindung des Führungsblockes mit den U-förmigen Seitenteilen über acht Nietverbindungen. Bei Nietverbindungen entstehen typischerweise Überstände, die das Kassetten-Einbau-Maß über die Breite der U-förmigen Seitenteile hinaus vergrößern. Da das Einbau-Maß, vorgegeben vom Fahrzeughersteller, zu immer kleineren Werten tendiert, war es notwendig, in einem dem Nietvorgang vorhergehenden Schritt die Nietlöcher anzusenken, damit der Nietkopf nicht übersteht. Dieses Verfahren ist jedoch relativ aufwändig.

Der Erfindung liegt die Aufgabe zugrunde, für das eingangs bezeichnete Überrollschutzsystem für Kraftfahrzeuge mit einem Überrollbügel, der in einem fahrzeugfest anbringbaren kassettenartigen Gehäuse geführt ist, das zwei U-förmige Seitenteile besitzt, die unten über ein Bodenteil und oben über einen Führungsblock miteinander verbunden sind, eine mechanische Verbindung des Führungsblockes mit den U-förmigen Seitenteilen zu schaffen, die mit relativ einfachen Mitteln ohne Überstände herstellbar ist.

Die Lösung dieser Aufgabe gelingt gemäß der Erfindung dadurch, daß der Führungsblock über eine formschlüssige Verbindung ohne seitlichen Überstand mit den U-förmigen Seitenteilen verbunden ist.

Eine derartige formschlüssige Verbindung ohne seitlichen Überstand, die also in das Kassetteninnere gerichtet ist, ist relativ einfach herzustellen, insbesondere indem die Verbindungselemente bereits bei der Herstellung der U-förmigen Seitenteile und des Führungsblockes mit ausgeformt werden. Die Fügetechnik ist mit Vorteil werkzeugfrei und benötigt insbesondere keine Nietstation.

Eine sehr montagefreundliche formschlüssige Verbindung ist gegeben, wenn diese gemäß einer Ausgestaltung der Erfindung als Rast- oder Schnappverbindung ausgebildet ist. Der Führugsblock kann dann einfach in die U-förmigen Seitenteile eingeschoben werden und rastet dann selbsttätig in der Soll-Position ein.

Dem Fachmann stehen eine Reihe von Möglichkeiten zur Ausbildung einer Rast- oder Schnappverbindung zur Verfügung. Eine vorteilhafte Konstruktion ist gemäß einer Weiterbildung der Erfindung gegeben, wenn an beiden Schenkeln der U-förmigen Seitenteile jeweils eine elastisch nachgebende, zum Kassetteninneren hin abgebogene Lasche oder Zunge ausgebildet ist, und an den Enden des Führungsblockes, die in den U-förmigen Seitenteilen aufgenommen sind, seitlich Nuten ausgeformt sind, derart, daß in der Soll-Befestigungsposition die Lasche oder Zunge in die zugeordnete Nut einrastet.

Eine derartige formschlüssige Verbindung ist mit Vorteil auf relativ einfache und wirtschaftliche Weise herzustellen, indem die Lasche oder Zunge jeweils aus dem Material der Schenkel der U-förmigen Seitenteile freigeschnitten und geprägt ist, bzw. die Nut durch eine Ausfräsung am Führungsblock gebildet ist.

Anhand eines in den Zeichnungen beschriebenen Ausführungsbeispieles wird die Erfindung näher beschrieben.

Es zeigen:
- Fig. 1: in einer vereinfachten Darstellung den grundsätzlichen Aufbau eines bevorzugten Überrollbügel-Systems nach dem Kassettenprinzip mit Führungsblock und U-förmigen Seitenteilen, wobei eine formschlüssige Verbindung zwischen Führungsblock und Seitenteilen vorgesehen ist,
- Fig. 2: in Figurenteil A im vergrößerten Maßstab einen Ausschnitt aus Fig. 1 unter näherer Darstellung der formschlüssigen Verbindung mit Rastzungen an den Seitenteilen und Rastnuten am Führungsblock, wobei der Figurenteil B einen Querschnitt entlang der im Figurenteil A gezeigten Schnittlinie zeigt,
- Fig. 3: in einer vereinfachten Darstellung ein bekanntes Überrollbügel-Kassettensystem, bei dem die Erfindung bevorzugt Anwendung findet, und
- Fig. 4: in einer schematischen Schnitt-Darstellung den bekannten Einbau eines Überrollbügel-Kassettensystems in einem fahrzeugfesten Schacht.

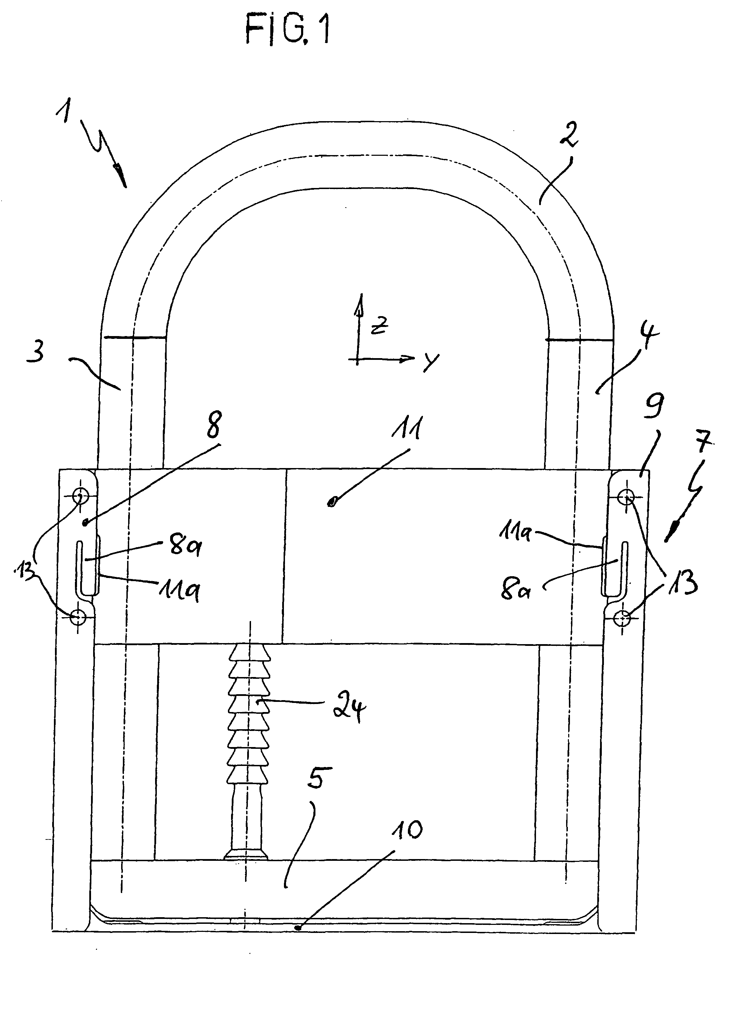

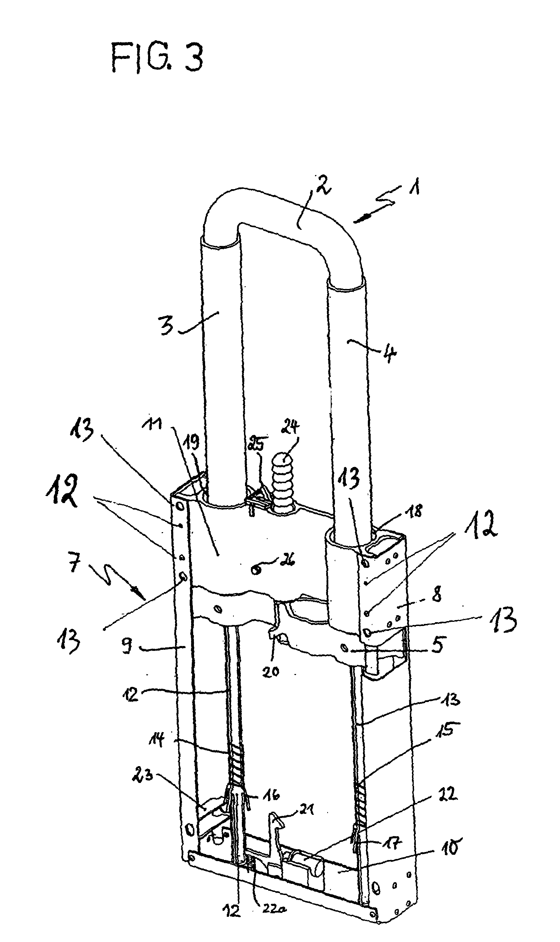

In Fig. 1 ist in einer vereinfachten Darstellung der grundsätzliche Aufbau eines bevorzugten Überrollschutz-Systems nach dem Kassettenprinzip dargestellt, wie es beispielsweise in der DE 100 40 649 C1 beschrieben ist. Des besseren Verständnis wegen ist die Fig. 1 dieser DE-Schrift als Fig. 3 in die vorliegenden Unterlagen übernommen worden.

Dieses Überrollschutzsystem weist zunächst einen U-förmigen Überrollbügel 1 auf, welcher typischerweise aus drei Rohren zusammengesetzt ist. Dabei bildet den Basisschenkel des Überrollbügels 1 im wesentlichen ein gekrümmtes Rohr 2, welches an seinen Enden mit zwei Schenkelrohren 3, 4 durch Schweißen oder andere geeignete Verbindungsarten starr verbunden ist.

Außer zylindrischen Querschnitten für die Bügel-Schenkelrohre können aus Stabilitätsgründen auch ovale oder eckige Querschnitte gewählt werden.

Prinzipiell sind auch andere Formen eines Überrollkörpers einsetzbar, beispielsweise ein Überrollkörper, der aus einem einstückigen Profilkörper gebildet ist.

Die offenen Enden der Schenkelrohre 3, 4 sind mittels einer Traverse 5 miteinander starr verbunden. Zu diesem Zweck ist die Traverse 5 als Profilkörper mit vorgegebener Höhe ausgebildet, der Bohrungen zur Aufnahme der Enden der Schenkelrohre 3, 4 aufweist, in denen sie befestigt sind.

Der Überrollbügel 1 ist mit seinen beiden Schenkelrohren 3, 4, die eine geschlossene Mantelfläche aufweisen, in einem kassettenartigen Gehäuse 7 aufgenommen und aus- bzw. einfahrbar darin gehaltert. Dieses Gehäuse weist zwei Seitenteile 8, 9 auf, die durch einen U-förmigen Profilkörper gebildet werden, die vorzugsweise aus Metall, insbesondere aus Stahl, bestehen. Diese Seitenprofile 8, 9 sind unten über ein Bodenblechteil 10 und oben über einen Führungsblock 11 miteinander verbunden.

Im Bodenblech 10 sind, wie die Fig. 3 näher zeigt, zwei Federführungsbolzen 12, 13 verankert, auf denen vorspannbare Antriebs-Druckfedern 14, 15 zum Ausfahren des Überrollbügels 1 im Gefahrenfall bzw. bei Handauslösung, aufgeschoben sind und die direkt von den Schenkelrohren 3, 4 umfaßt sind.

Dieses Antriebssystem ist der Einfachheit halber in Fig. 1 nicht näher dargestellt.

Ebenso nicht dargestellt ist das sensorgesteuerte Halte- und Auslösesystem für das Niederhalten des Überrollbügels im Normalzustand sowie für das schnelle Ausfahren im Gefahren- bzw. Testfall.

Von dem Verriegelungssystem zum Verhindern des Einfahrens des ausgefahrenen Überrollbügels ist lediglich der bekannte auf der Traverse 5 befestigte Rastdorn 24 der Fig. 3 in Fig. 1 dargestellt.

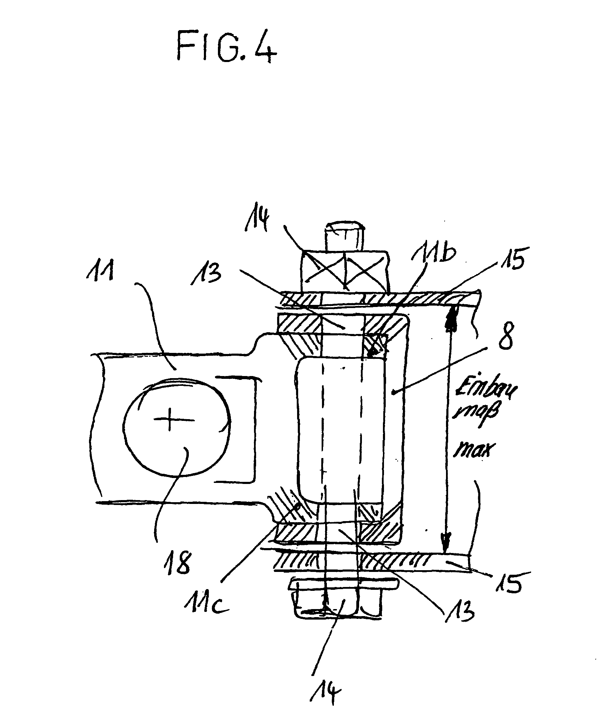

Der Führungsblock 11 besitzt zwei Führungsbohrungen 18, 19, die die Mantelfläche der Schenkelrohre 3, 4 seitlich abstützen und eine sehr weit tolerierte Führung für die sich längs der Führungsbohrungen bewegenden Schenkelrohre 3, 4 bieten. Er besitzt ferner an beiden seitlichen Enden U-förmige Fortsätze 11 b, 11 c (Fig. 4), mit denen er bei der Montage zwischen die Schenkel der U-förmigen Seitenteile 8, 9 eingeschoben und mechanisch mit diesen verbunden wird. Diese mechanische Verbindung erfolgt derzeit durch eine Nietverbindung, wobei in Fig. 3 die Nietköpfe, die nunmehr mit Position 12 bzeichnet werden, zu erkennen sind. Pro Überrollsystem sind dabei acht Nietverbindungen notwendig.

Die so komplettierte Kassette wird beim Automobilhersteller fahrzeugfest eingebaut. Dies geschieht, je nach Fahrzeugtyp, auf unterschiedliche Weise. Eine vorteilhafte, weil auch montagefreundliche Methode, besteht darin, im Fahrzeug ein schachtförmiges Gehäuse 15 (Fig. 4) zu verankern, sei es am Boden, an einer Fahrzeugwand, oder am Sitz, und in den Schacht 15 die Kassette einzuschieben und mittels Schraubverbindungen 14 im Schacht zu befestigen. Dazu sind an beiden Enden des Führungsblockes 11 bzw. der U-förmigen Seitenteile 8, 9 jeweils zwei Bohrungen 13 zur Aufnahme der zugehörigen Schrauben 14 ausgebildet (Fig. 4).

Das maximale Einbaumaß des Schachtes 14 wird von dem Fahrzeughersteller vorgegeben. Infolge des beengten zur Verfügung stehenden Raumes im Fahrzeuginneren, tendiert das Einbaumaß zu kleinen Werten. Dadurch entstehen jedoch Probleme beim Einführen der Kassette in den Schacht 14 durch die bei Nietverbindungen typischerweise entstehenden Überstände. Dies führt dazu, daß eine aufwändige Senk-Nietverbindung eingesetzt werden muß, sogenannte Blindnieten. Neben dem Nietvorgang muß daher noch in einem weiteren, vorhergehenden Fertigungsschritt ein Ansenken der Nietlöcher in den U-förmigen Seitenteilen erfolgen.

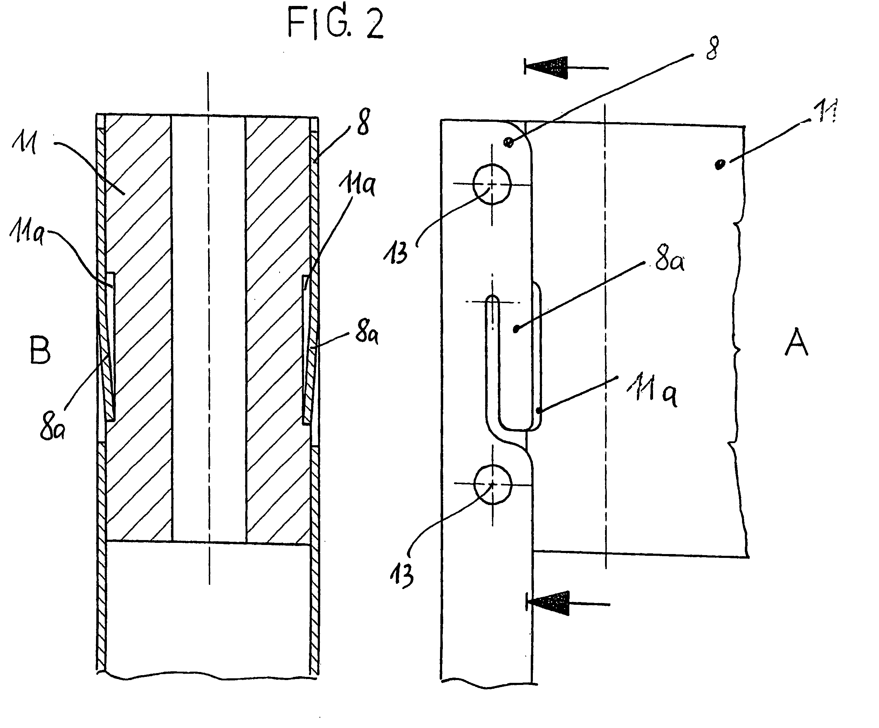

Diese aufwändige Niet-Verbindung wird erfindungsgemäß durch eine formschlüssige Verbindung nach Fig. 2 ersetzt. Hierbei handelt es sich letztlich um eine werkzeugfreie Montagehilfe für das Zusammenfügen von Führungsblock 11 und den U-förmigen Seitenteilen 8, 9, da diese Verbindung keine hohen Kräfte aufnehmen muß, sondern sozusagen nur die Kassette bis zur Montage in den fahrzeugfesten Schacht "zusammenhalten" muß.

Wie man aus Fig. 2 erkennt, sind in den Schenkeln der U-förmigen Seitenteile - hier des Seitenteiles 8 - zwei federnde Laschen 8a, die als Verriegelungszungen wirken, ausgeformt. Diese Ausformung erfolgt vorzugsweise bereits bei der Herstellung der U-förmigen Seitenteile 8, 9, die typischerweise so erfolgt, daß, ausgehend von einer rechteckigen Blechplatine, diese entlang der Längsseiten unter Bildung der Schenkel, der Seitenführungen, der U-förmigen Seitenteile rechtwinklig abgekantet werden. Vor diesem Abkanten werden in den Platinenabschnitten, die die späteren Schenkel bilden, die Laschen freigeschnitten und geprägt, derart, daß sie etwas nach innen unter Bildung von federnden Zungen abgebogen werden.

Als Gegenlager für die federnden Laschen bzw. Zungen 8a sind in dem Führungsblock 11 Nuten 11a eingefräst. Der Führungsblock 11 wird dann bei der Montage in den Rahmen der Kassette eingeschoben. Die federnden Laschen 8a an den Seitenführungen des Rahmens geben den Weg frei, bis die Verriegelungsposition gemäß Fig. 2 erreicht wird. In dieser Verriegelungsposition greifen die Laschen in die eingefrästen Nuten 11a am Führungsblock 11, wodurch ein Formschluß zwischen diesen Bauteilen erreicht wird. Dieser verhindert das Auffedern des Rahmens in Y-Richtung und hält den Führungsblock gegen die Kräfte der Crashfedern in Position. Für den Transport bis zur Montage der Kassette in das Fahrzeug stellt dies eine ausreichend sichere Verbindung dar. Das Gesamtsystem ist jedoch nur in Verbindung mit den entsprechenden Befestigungselementen im Fahrzeug, d.h. der Kassette im Schacht und des Schachtes am Fahrzeug zur Kraftaufnahme bereit.

Die vorstehend beschriebene formschlüssige Rast-Verbindung, die ein bevorzugtes Ausführungsbeispiel von weiteren möglichen formschlüssigen Verbindungsarten, insbesondere von Rast- oder Clip-Verbindungen, ist, weist gegenüber den bisher benutzten Nietverbindungen eine Reihe von Vorteilen auf.
- Es handelt sich um eine werkzeugfreie Fügetechnik,
- Einrichtungen wie eine Nietstation können entfallen.
- Auf einfache Weise ist eine Option als Bauraumausnutzung gegeben. Die Breite der Kassette = Breite des Rahmens, ohne daß Nieten versenkt werden müssen.
- Material- und damit Kosteneinsparung
Die notwendigen Laschen können bei der Herstellung der Seitenführung aus dem vorliegendem Material mit eingeprägt werden.

Bei der Herstellung der Nuten im Führungsblock ist dabei praktisch kein Mehraufwand gegeben, denn die Einbringung der Nuten am Führungsblock ersetzt das Bohren der Nietlöcher im bekannten Niet-Prozeß.

## Patentansprüche

1. Überrollschutzsystem für Kraftfahrzeuge, mit
einem Überrollbügel (1), der in einem fahrzeugfest anbringbaren kassettenartigen Gehäuse (7) geführt ist, das zwei U-förmige Seitenteile (8, 9) besitzt, die unten über ein Bodenteil (10) und oben über einen Führungsblock (11) ohne seitlichen Überstand miteinander verbunden sind, **dadurch gekennzeichnet, daß** der Führungsblock (11) und die U-förmigen Seitenteile integrale Verbindungselemente (8a, 9a; 11a) für eine formschlüssige Verbindung in Form einer Rast- oder Schnappverbindung aufweisen.

2. Überrollschutzsystem nach Anspruch 1, **dadurch gekennzeichnet, daß** an beiden Schenkeln der U-förmigen Seitenteile (8, 9) jeweils eine elastisch nachgebende, zum Kassetteninneren hin abgebogene Lasche oder Zunge (8a, 9a) als ein Verbindungselement ausgebildet ist, und an den Enden des Führungsblockes (11), die in den U-förmigen Seitenteilen (8, 9) aufgenommen sind, seitlich Nuten (11a) als das andere Verbindungselement ausgeformt sind, derart, daß in der Soll-Befestigungsposition die Lasche oder Zunge (8a, 9a) in die zugeordnete Nut (11a) einrastet.

3. Überrollschutzsystem nach Anspruch 2, **dadurch gekennzeichnet, daß** die Lasche oder Zunge jeweils aus dem Material der Schenkel der U-förmigen Seitenteile (8, 9) freigeschnitten und geprägt ist.

4. Überrollschutzsystem nach Anspruch 2 oder 3, **dadurch gekennzeichnet, daß** die Nut (11a) durch eine Ausfräsung am Führungsblock (11) gebildet ist.

## Claims

1. A rollover protection system for motor vehicles, comprising
a roll bar (1) guided in a cassette-like housing (7) which can be firmly attached to the motor vehicle and which has two U-shaped side parts (8, 9) which are joined to each other, without lateral projection, by a base part (10) at the bottom and by a guide block (11) at the top,
**characterised in that** the guide block (11) and the U-shaped side parts have integral connection elements (8a, 9a; 11a) for a positive connection in the form of a latching or snap-in connection.

2. A rollover protection system according to claim 1, **characterised in that** a resiliently yielding tab or tongue (8a, 9a) which is bent toward the interior of the cassette is constructed as a connection element on each of the two limbs of the U-shaped side parts (8, 9) and, as the other connection element, notches (11a) are formed laterally at the ends of the guide block (11), which ends are accommodated in the U-shaped side parts (8, 9), in such a manner that, in the intended fastening position, the tab or tongue (8a, 9a) engages in the associated slot (11a).

3. A rollover protection system according to claim 2, **characterised in that** the tab or tongue is cut free from the material of the limbs of the U-shaped side parts (8, 9) and stamped.

4. A rollover protection system according to claim 2 or 3, **characterised in that** the slot (11a) is formed by being milled into the guide block (11).

## Revendications

1. Système de protection au retournement pour véhicules automobiles, avec
un arceau de sécurité (1) qui est guidé dans un boîtier (7) en forme de cassette qui peut être monté fixement sur un véhicule automobile, lequel boîtier comporte deux parties latérales en forme de U (8, 9) qui sont raccordées l'une à l'autre sans porte-à-faux latéral, en bas par un élément de fond (10) et en haut par un sabot de guidage (11), **caractérisé en ce que** le sabot de guidage (11) et les parties latérales en forme de U comportent des éléments de raccordement intégrés (8a, 9a ; 11a) pour un raccordement solidaire sous forme d'un assemblage à crans ou à enclenchement.

2. Système de protection au retournement selon la revendication 1, **caractérisé en ce qu'**un collier ou une languette (8a, 9a) élastique recourbé vers l'intérieur de la cassette est respectivement conçu comme un élément de raccordement sur les deux branches des parties latérales en forme de U (8, 9) et **en ce que**, aux extrémités du sabot de guidage (11) qui sont logées dans les parties latérales en forme de U (8, 9), des rainures (11a) sont formées latéralement comme l'autre élément de raccordement, de manière à ce que, dans la position de fixation prescrite, le collier ou la languette (8a, 9a) s'enclenche dans la rainure associée (11a).

3. Système de protection au retournement selon la revendication 2, **caractérisé en ce que** le collier ou la languette est respectivement découpé non guidé et matricé dans la matière des branches des parties latérales en forme de U (8, 9).

4. Système de protection au retournement selon la revendication 2 ou 3, **caractérisé en ce que** la rainure (11a) est formée par une fraisure dans le sabot de guidage (11).
